# EUROPEAN PATENT APPLICATION

(11) **EP 1 860 824 A1**
(43) Date of publication of application: **28.11.2007**
(21) Application number: 07252177.6
(22) Date of filing: 25.05.2007
(51) Int. Cl.: H04L 12/24

(54) **Monitoring of network management systems**

(30) Priority: 26.05.2006 GB 0610532
(71) Applicant: Abilisoft Ltd, Hampshire RG28 7AB (GB)
(72) Inventor: Onacko, Andy, St Albans Hertfordshire, AL1 2DT (GB); Charles, Dave, Wilstead Bedfordshire, MK45 3FD (GB)
(74) Representative: Crawford, Andrew Birkby

(57) **Abstract**

The invention relates to a system and method for monitoring the availability and performance of an organisation's Business/Operational Support System (B/OSS) and Business Service Management Systems (BSM) which are referred to as a target platform. The invention gathers data from that monitored OSS/BSS/BSM arising from a distinct knowledge of the OSS/BSS/BSM's anatomy including its behaviour, log messages, configuration and public APIs and analyses that data to determine the OSS/BSS/BSM's run and configuration state, and performance, so as to report on these and other system events detected. This will allow the operational impact of the monitored OSS/BSS/BSM to be ascertained.

## Description

The present invention relates to monitoring of a distinct genre of network management tools which are utilised in an information technology (I.T) infrastructure in an enterprise, namely Operations Support Systems, Business Service Management Systems and Network Operations management Systems.

Such tools currently exist and have become more distributed in nature and have grown considerably in complexity, both in their installation, deployment and configuration. Such tools are pivotal to the smooth operation of the I.T infrastructure in an enterprise and therefore the operation of the enterprise itself.

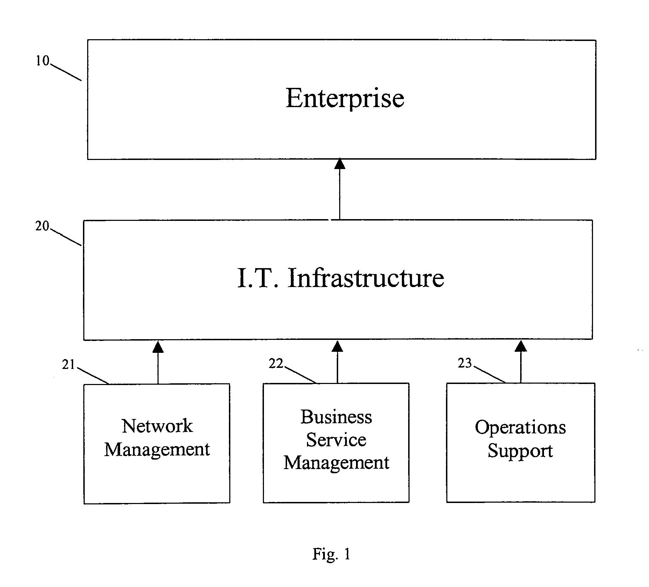

Fig. 1 shows the basic architecture of this conventional environment.. One can see the enterprise (10) is underpinned by the I.T. infrastructure (20) and that it in turn is supported, provisioned, monitored and measured by the genre of tools that fall into the category of Network Management (21), Business Service Management (22) and Operations Support (23).

An example of a Network Management System (21) is Netcool® and is used to provide network fault management of the I.T. infrastructure. As described in W0/078262 A1 in the name of Micromuse, Inc, a Netcool system comprises status monitors known as probes which sit directly on an infrastructure component, i.e. server, switch, and gather raw data values.

As is often the case with any software system, the network management system suffers from design faults, limitations or software errors (bugs) that affect the network management system performance including its availability, capacity and latency.

Referring to Fig. 1 it is evident that each of these tools (21, 22, 23) focus on the infrastructure they intend to monitor and/or provision and the services that infrastructure provides. The enterprise has no assurance that the tools providing support, provisioning and monitoring are themselves operating correctly, that is, there is no provision in the state of the art to "monitor the monitor".

The solution to this problem is to employ some sort of monitoring system akin to the network management system itself.

However, such products (by design) provide monitoring and support of widely used middleware technologies like (for example): Application Server technologies [JBOSS, Tomcat, WebSphere, WebLogic, Microsoft.NET]; Web Server technologies [IIS, Apache, PHP]; Backbone and PubSub technologies [TIBCO];
Databases [Oracle, Sybase, DB2]. They do not specifically support the monitoring of the network management system.
Other drawbacks also exist with the current network management systems 20. One such drawback is that it is not possible to determine the network management systems instantaneous (runtime) capacity, latency or availability from the current network management arrangement. This type of information is collectively known as the 'dynamic health' of the system. Furthermore, it is not possible to monitor (pre-runtime) configuration changes that coerce the behaviour of the network management system at runtime. This is known as 'static health'.

What is required is a monitoring solution that has a complete understanding of the anatomy Network Management (21), Business Service Management (22) and Operations Support (23) systems including their behaviour, log messages, configuration and public APIs.

The present invention proposes to overcome the drawbacks associated with prior art systems by introducing a further layer into the architecture described in Fig. 1 which is capable of monitoring the Network Management, Business Service Management and Operations Support systems by leveraging a complete understanding of the anatomy of the tools including their behaviour, log messages, configuration and public APIs.

Accordingly, from a first aspect the present invention provides a monitoring system for monitoring a Target Platform which monitors an I.T. infrastructure wherein the monitoring system comprises processing means for analysing data obtained from instrumentation of the Target Platform indicative of its pre-runtime and runtime characteristics to determine parameters relating to the overall performance of the Target Platform.

Preferably an embodiment of the invention comprises at least one data collection agent for gathering data from the Target Platform in a first format; and acquisition means for converting the data from a first format into a second format for further processing. In this manner, the data can be received in a first format regardless of where in the Target Platform it has come from and converted into a preferred format for further processing by the monitoring system. By converting the data into this second format many different types of Target Platform may be monitored in a specific way while maintaining a generic approach to the analysis of the collected data by the embodiment of the invention. The processing means is operable to extract data from the collected sample data and convert it into a predetermined format for which further analysis can be easily performed.

The present invention is also capable of monitoring instantaneous (runtime) performance of the network monitoring system including availability, capacity and latency which is collectively known as "dynamic health" of the network monitoring system.

The "availability" relates to whether the individual components of the network management system are running and responding. The "capacity" relates to measuring the amount of data stored by the network management system and the amount of memory being used by it. The "latency" relates to the time taken for data items being processed by the network management system to propagate through individual elements from the time it enters the network management system to the time of exit or display.

The present invention monitors the "static health" of the network management system by making the operator aware of changes to the network management system configuration item. The configuration changes will also be correlated with significant changes in dynamic health.

In order that the present invention be more readily understood an embodiment thereof will be described by way of example with reference to the drawings in which:
Fig. 1 shows a conventional network architecture;
Fig 2 shows a network architecture according to a preferred embodiment of the present invention [and how B/OSS & NMS Monitoring provides assurance that the B/OSS & NMS are supporting, provisioning, monitoring and measuring the I.T Infrastructure adequately];
Fig. 3 shows a network architecture as in Fig. 2 identifying what part of the architecture a preferred embodiment of the invention categorises as a Target Platform;
Fig. 4 shows the architecture of the monitoring system according to the preferred embodiment of the invention;
Fig. 5 shows the agent and acquisition modules of Fig. 4 in more detail;
Fig. 6 shows the analysis module of Fig. 4 in more detail;

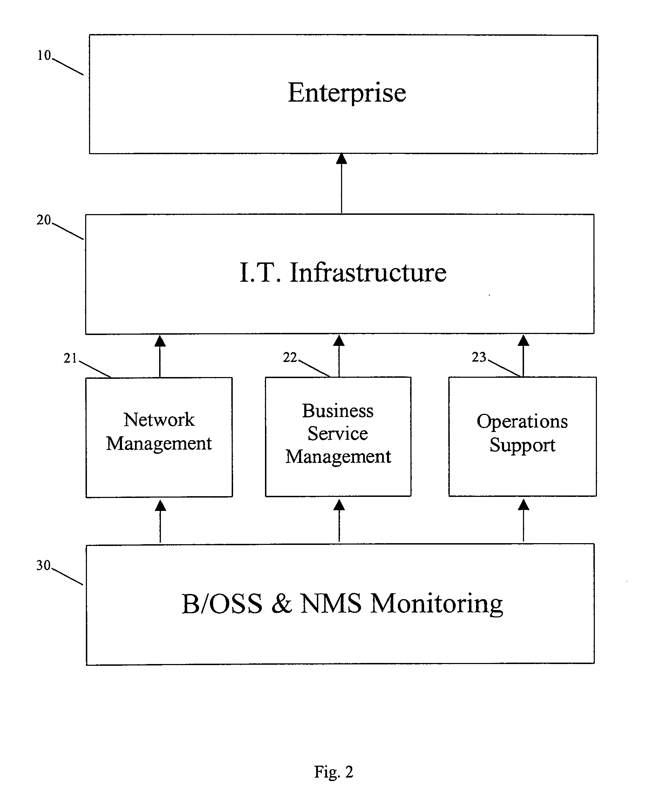

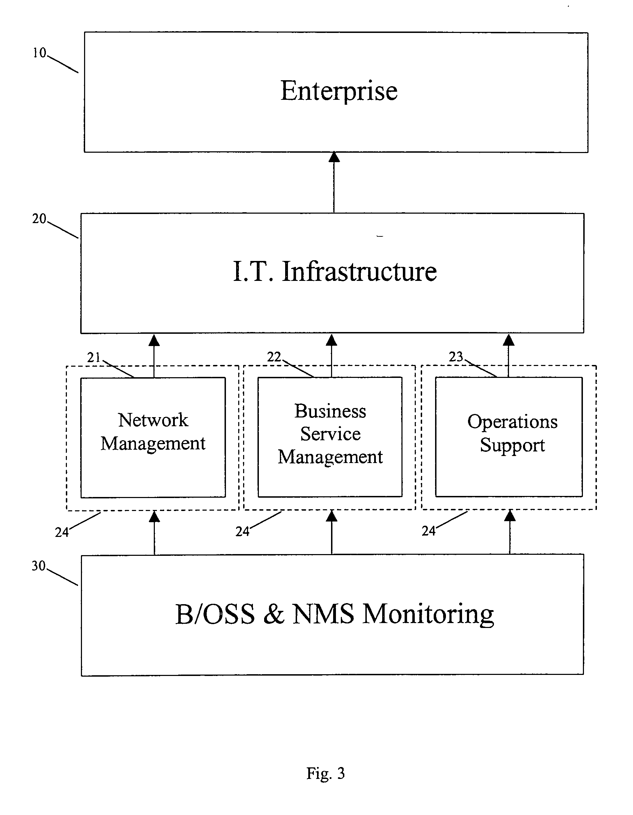

A preferred embodiment of the present invention will now be described and the preferred architecture adopted by the present invention is shown in Figs. 2 and 3.

Fig. 2 shows how the embodiment of this invention (30) fits into the conventional architecture of Fig. 1. Here it is evident that a B/OSS & NMS Monitoring System (30) will provide the assurance that Network Management (21), Business Service Management (22) and Operations Support (23) systems are operating correctly and supporting L.T. Infrastructure (20) in the same manner that they themselves are providing assurance that the I.T. Infrastructure (20) is supporting the Enterprise (10).

When referring to Network Management (21), Business Service Management (22) or an Operations Support (23) system hereinafter this will be categorised it as a "Target Platform" (24) as described in Fig. 3.

As shown the architecture is based on that of the prior art shown in Fig. 1. However, the present invention includes a monitoring system 30 to monitor a target platform 24. The monitoring system 30 monitors components of a target platform. It should be noted that it does not monitor the I.T. infrastructure layer which is already supported, provisioned, monitored and measured by the target platform 24.

As mentioned previously with respect to Fig. 1, the various target platforms 24 support, provision, monitor and measure the I.T infrastructure 20. For example, possible target platforms 24 that achieve this functionality are Managed Objects BSM^{™} platform, and Netcool® platform.

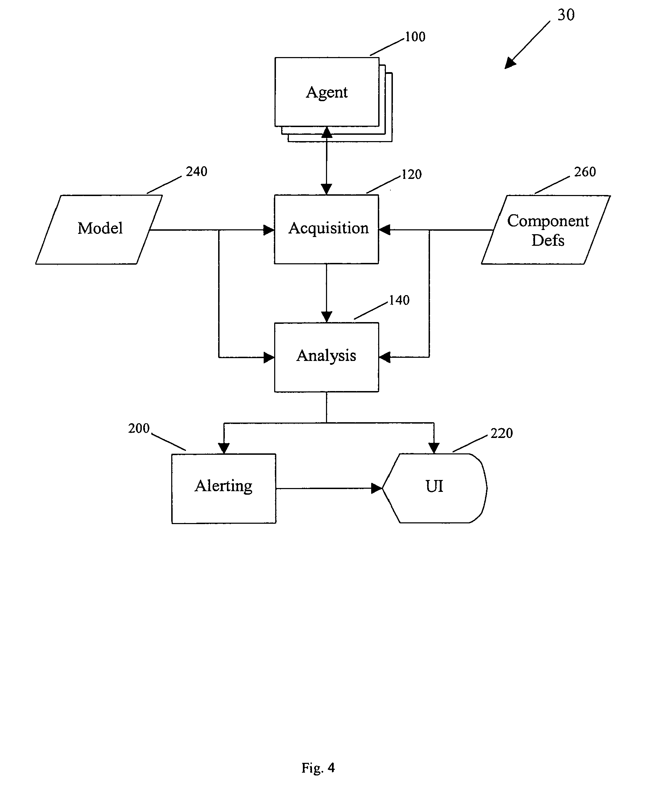

Figure 4, shows a schematic diagram representing the general architecture of the monitoring system 30. The system 30 comprises at least one agent module 100, acquisition module 120, analysis module 140, alerting module 200 and user interface (UI) 220. The system utilises a data store containing a descriptive model 240 and a data store containing component definitions 260.

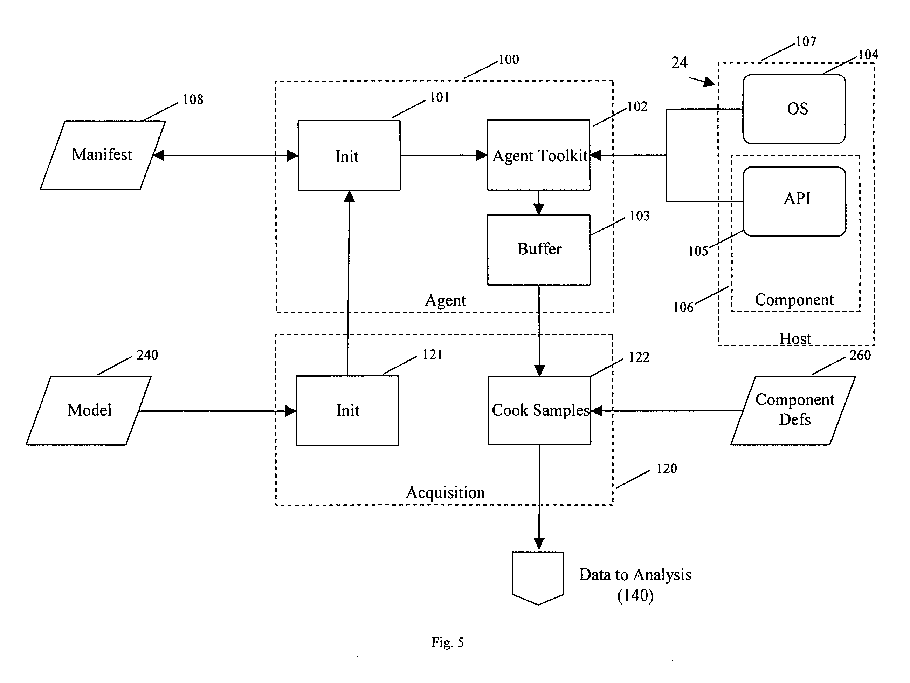

Figure 5, shows the component 106 which corresponds to a single component of a target platform 24. That is, in this embodiment there is only one component 106. It will be appreciated that it would be possible for the embodiment of the invention to monitor a plurality of components as required. Accordingly, for ease of explanation only one component 106 is shown.

The target platform 24 is for example the Netcool® platform and the monitoring system 30 has been pre-configured to recognise such a target platform 24. The target platform 24 comprises at least one "host" 107 and each host comprises at least one "platform component" 106. By "host", we mean a host computer such as a Solaris or Red Hat Linux server.

The platform component 106 is an identifiable component of a target platform 24. For example, a platform component may be a Netcool/OMNIbus probe, Netcool/OMNIbus Object Server or a Netcool/OMNIbus Gateway Server. Accordingly each of these components would be recognised platform components 106.

The host 107 is the computer that the platform component 106 executes on. The host 107 may run more than one platform component and these may be of the same or different types. Furthermore, the target platform 24 may comprise more than one host 107.

The descriptive model 240 contains details of the instance of a target platform (24) to be monitored, namely the hosts (107), components (106) to be found on those hosts and specific parameters required to effect the data collection and data analysis for each component (106) at each host (107). The component definitions 260 contain a plurality of data items pertaining to the anatomy of each component 106 including:
(a) how a component's execution should be detected.
(b) what tools the data collection agent 100 should employ to collect the required data.
(c) what processing functions the acquisition component should use to transfigure the collected data prior to analysis.
(d) data describing how the state of a component is modelled and analysed.

### Agent Module 100

The agent module 100 collects data in the form of "samples" from the platform components 106 for further processing by the acquisition module 120.

The agents 100 will each reside on a different host 107. That is, each host 107 will comprise a different agent. With this configuration, the collected data may be acquired from many platform components 106 and contain information required for multiple "platform component instances". This platform component instance (PCI) is a component part of the descriptive model in that the target platform to be monitored is defined in terms of each PCI at a given location (i.e. the host location). For example, there will be a PCI for each Netcool Object Server deployed as part of a target platform 21, 24.

The agent 100 is adapted to refer to a set of instructions (hereinafter "manifest" 108) which is derived from the descriptive model 240 and the component definitions 260 and specifies the components 106 that should be monitored by the agent 100, the specific tools to use to collect the sample data as well as the periodicities at which this should be carried out.

The manifest 108 is transmitted to the agent 100 by the acquisition module 120 during initialisation. This is so that an agent toolkit 102 may be configured according to the monitoring requirements at the agent's location.

The agent 100 initiation is as follows. The agent 100 creates a platform component instance (PCI) object as defined in the manifest (108) to represent the OSS component 106 to be monitored, where the PCI defines all sampling that will performed. Sampler objects for each sampling activity of a component 106 are created as defined in each PCI in the manifest 108 which represents the individual sampling activities that must be performed at the specified periodicity and using the specified tool from the agent toolkit 102. The tool parameters are set in the sampler objects as defined in the sampling activity for a PCI.

With this initiation, the agent 100 is aware of the component 106 which was sampled to obtain the sample and this information can be added to the sample data structure. During its execution the agent 100 invokes each sampler object according specified periodicity so that it executes the configured tool from the agent toolkit 102.

In the first instance the agent 100 collects data utilising the agent toolkit 102 by interrogating the operating system 104 to obtain process information and configuration information pertaining to the monitored component. In the second instance the agent 100 collects utilising the agent toolkit 102 by connecting to the component via its public APIs.

The results are packaged and the collected data is placed in the agent's buffer 103 ready for transmission to the acquisition module 120.

The agent module 100 is also responsible for injecting synthetic data into the target platform so that it can be collected by another agent 100 monitoring a different component 106. The nature of the synthetic data and the method of it's injection is defined in the component definitions 260. Injected synthetic data is collected in a similar manner to other collected platform component data, the definition of that collection is specified in the component definition 260.

### Acquisition Module 120

The acquisition module 120 will orchestrate the building and dispatching of a manifest 108 for each agent 100 and the gathering of sample data from each agent 100.

The acquisition module initialises as follows. Acquisition module 120 loads a descriptive model 240 representing the target platform 24 to be monitored and extracts data pertaining to each platform component instance's specific data. Furthermore, acquisition 120 loads a plurality of component definitions 260 which describe the anatomy of each platform component and what computer program methods the agent 100 should use to acquire data from the particular type of target platform to be monitored and what computer program methods acquisition 120 should use to format 122 the data acquired.

Once a manifest 108 is created for each location they are distributed to a plurality of agents 100 in order to enable each agent to initialise 101 and perform specific data collection tasks 102.

The acquisition module 120 gathers data from the agents as follows. The acquisition module 120 will be notified by each agent 100 when an adequate amount collected sample data is ready for collection and on such notification acquisition 120 will receive collected sample data. The acquisition module 120 will look up the relevant component definition so as to determine the program method (cook function) that must be executed with the collected data as argument. The acquisition module 120 will invoke the relevant cook function and transmit the resulting data to the analysis module 140 for further processing.

As discussed above the acquisition module 120 orchestrates the collection of sample data based on the definition of a platform component instance (PCI).

Each platform component instance is associated with a platform component definition (PCD) which defines a platform component type and it is a plurality of these PCDs that are defined in the component definitions 260. The PCD comprises a definition of platform component 106 types which are understood in terms of the data which can be received from the platform components 106 anf the mechanisms to be employed by the agent toolkit 102 to collect that data. Also defined in the PCD is reference to the functionality to support data and the mappings between the collected sample data and sample data propagated to analysis 141.

### Analysis Module 60

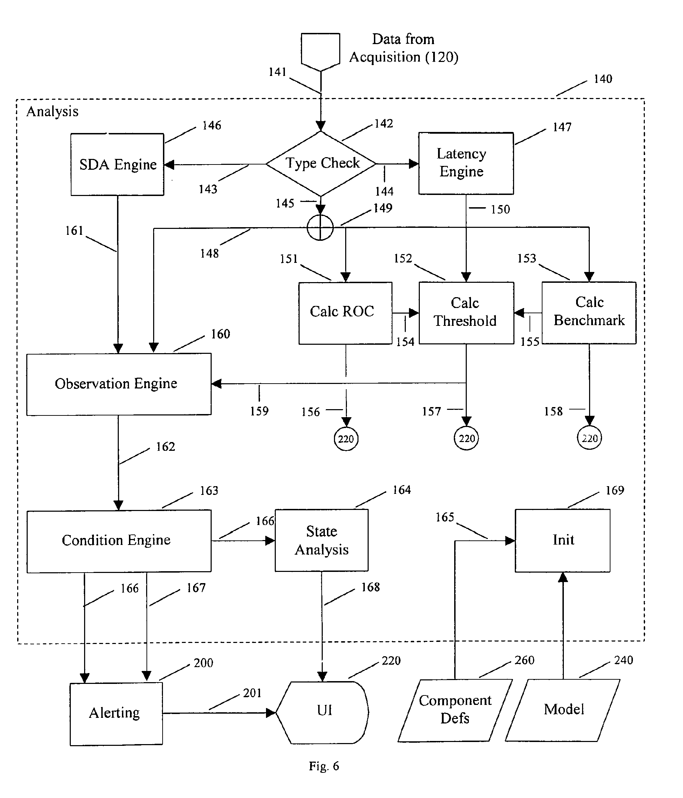

As shown in Fig. 6, the input to the analysis module 140 will be sample data 141 generated by the acquisition module 120. The main function of the analysis module 140 is to analyse the data acquired from the acquisition module 120 in order to infer meaning thereto.

Initialisation of the analysis module 140 is as follows. A descriptive model 240 representing the target platform to be monitored is loaded and data pertaining to the parameters required to perform the analysis functions is extracted. Also loaded is a plurality of component definitions 260, describing the analysis steps that should be performed to detect the status of each target platform component.

Each sample data item received 141 from the acquisition module 120 is examined. The sample data item is dispatched to a relevant analysis sub-system based on its type 143, 144, 145 as defined in the sample data 141 and the related loaded component definition. Sample data falls into the following types:
(a) Static data samples 143. This is collected data that relates to the pre-run-time (static) configuration of a platform component.
(b) Synthetic data samples 144. This is collected data that relates to data injected by the monitoring too 30 itself for the purposes of performance measurement.
(c) Dynamic Samples 145. This is collected data that relates to the run-time (dynamic) bahaviour of a platform component. There are two types of dynamic samples:
   (i) Dynamic scalar samples 149. Numeric values pertaining to the observed value of some aspect of a platform component.
   (ii) Dynamic aggregate samples 148. Non-numeric values pertaining to the observed value of some aspect of a platform component.

For the purposes of analysing various aspects of scalar values collected from a target platform component analysis 140 provides the following modules:
(a) A threshold breach module 152. This module examines a plurality of samples 149 to determine if a threshold has been breached given the parameters specified in the descriptive model 240 as follows:
   (i) an upper threshold limit.
   (ii) a lower threshold limit.
   (iii) if a breach is considered when the values are within the bounds specified by (i) and (ii) or outside the bounds specified by (i) and (ii).
      The threshold breach module also provides logic by way of suppression logic. This ensures that the configuration can control how sensitive the module is to threshold breaches, the parameters are:
   (iv) the number of samples that must breach the threshold.
   (v) the period in which that number of breaches must occur.
(b) A rate of change calculation module 151. This module examines a plurality of samples 149, whose timestamps fall into a time window as specified in the descriptive model 240. From the qualifying samples the module calculates the current rate of change of the scalar value of the data of one type collected from the monitored component 106. Results from the rate of change module can be transmitted to the threshold breach module to assess if the rate of change itself has breached a threshold.
(c) A benchmark calculation module 153. This module examines each sample 149, if so specified in the descriptive model 240, and calculates the current difference of the scalar value of the data collected from the monitored component 106 and the benchmark specified in the descriptive model 240. The result of this calculation elicits a positive or negative benchmark delta value. Results from the benchmark calculation module can be transmitted to the threshold breach module to assess if the benchmark delta itself has breached a threshold.

Static data samples 143 are processed as follows. The static data sample 143 is parsed, using the parser as specified in the loaded component definition, into the static data model format. The static data model formatted data is then processed using a processor as specified in the loaded component definition to determine if a static data event 161 should be raised. If an event is raised it is propagated to the observation engine 160.

Synthetic data samples 144 are processed as follows. As previously discussed the agent module 100 injects synthetic data into the target platform. Such data is tagged with:
(a) the time the synthetic data is injected into the target platform component.
(b) a unique identifier annotating that data as belonging to an instance of a specific performance check in time. This tag accompanies the synthetic data on its journey through the target platform components so that when the synthetic data is detected by another agent 100 the instance of a specific performance check can be uniquely identified.

In the analysis module 140 a plurality of synthetic data samples 144 are examined to ascertain which samples belong to the same performance check activity so as to enable the calculation of the overall transmission time of the synthetic sample. The result of this calculation, for each distinct performance check processed (if so configured in the descriptive model 240) as follows:
(a) propagated to the rate of change calculation 151 module.
(c) propagated to the threshold evaluation 152 module.
(d) propagated to the benchmark calculation 153 module.

Dynamic scalar samples 149 are processed as follows. If so configured in the descriptive model 240 the dynamic scalar samples 149 are propagated to the:
(a) rate of change calculation module 151. The rate of change calculation result 156 is transmitted to the UI 220 and optionally to the threshold breach module 154, 152.
(b) threshold calculation module 152. The threshold breach check result 157 is transmitted to the UI 220 and to the observation engine 159, 160.
(c) benchmark calculation module 153. The benchmark calculation result 158 is transmitted to the UI 220 and optionally to the threshold breach module 155, 152.

Dynamic aggregate samples 148 are processed as follows. Dynamic aggregate samples 148 are processed by the Observation Engine 160. Here the sample data is compared given the parameters defined in the component definition 260 related to the collected data as follows:
(i) the value to compare the sample data 148 with.
(ii) if the comparison is for equality.
(iii) if the comparison is for inequality.
(iv) default suppression parameters.
The component definition 260 also defines if the comparison value and the associated operator may be overridden in the descriptive model 240. There may be multiple observation definitions in the component definition 260 to allow the observation engine to elicit different observations for different comparisons.

The default suppression parameters drive observation engine's 160 suppression logic whereby an observation must occur at least a specified number of times within a specified period before the observation 162 is propagated to the condition engine 163. The descriptive model 240 may also define superseding suppression parameters that override those defined in the component definition 260.

The observation engine 160 also receives:
(a) Static data events 161 from the static data analysis engine 146.
(b) Threshold breach events from the threshold evaluation module 152.
These events are decorated as observations, passed through the suppression logic and propagated to the condition engine 163.

The purpose of the condition engine 160 is to evaluate observations 162 and create "conditions" 166, 167 based on condition definitions defined in the component definition 260 and descriptive model 240. There are two types of condition:
(a) Local Condition 166. A local condition relates to a specific platform component 106 and is raised when a certain set of observations 162 are detected for that component.
(b) Global Condition 167. A global condition releates to any number of platform components 106 and is raised when a certain set of local conditions 166 are raised.

Local condition processing is as follows. The condition engine module 163 examines a plurality of observations 162 transmitted to it by the observation engine 160 given the parameters pertaining to a local condition as defined in the component definition 260 for the relevant component. A local condition definition defines the observations that contribute to it and a time window in which they must occur together.

An observation is annotated if it is one that in full or in part contributes to a local condition if it is defined as an observation that contributes to that local condition in the component definition 260 for the relevant component. A local condition is raised if and only if, all relevant observations have occurred as defined in the component definition 260 for the relevant component and that the observations have all occurred within a time window as defined in the descriptive model 240. The local condition 166 is propagated as follows:
(a) to the alerting module 200
(b) to the state analysis module 164

Global condition processing is as follows. The condition engine module 163 examines a plurality of local conditions raised by the condition engine module 163 given the parameters pertaining to a global condition as defined in the descriptive model 240.

A local condition is annotated if it is one that in full or in part contributes to a global condition if it is defined as a local condition that contributes to that global condition in the descriptive model 240. A global condition is raised if and only if, all relevant local conditions have occurred as defined in the descriptive model 240 and that the local conditions have all occurred within a time window as defined in the descriptive model 240, The global condition 167 is propagated as follows:
(a) to the alerting module 200

As discussed, local conditions 166 are propagated to the state analysis module 164. The state analysis module maintains a representation of the monitored platform component's 106 "state" based on collected data. As discussed, collected data is converted into local and global conditions 166, 167 by the condition engine 163. Local conditions are the items of data that coerce the state analysis module's 164 notion of what state the monitored platform component 106 is in. Whenever a new local condition 166 arises then there may be a change in known state as determined by the state analysis module 164.

The state analysis module is initialised with a set of state transition tables loaded from the component definition 260. State transition tables fall into "State Categories" so that multiple types of component state can be represented, for example:
(a) Run State. This state represents the execution state of a component.
(b) Configuration State. This state represents the state of a component's current configuration.

State categories may vary based on the type of target platform 24 and an enterprise's special requirements.

Each state transition table specifies a map that describes a starting state and which state to move to, given local condition. On receipt of a local condition 166 from the condition engine 163 the state analysis module 164 looks up the current state of the component in the state transition table and cross references the state to move to given the local condition. The updated state of the component is propagated to the UI module 220 for display.

The invention's embodiment is intended to allow users and other systems to be notified based on new local and global conditions raised due to observations made on the collected data. Alerts 201 generated are propagated to the UI module 220. Escalations include mechanisms such as propagating the alert data to a set of users via SMTP or SMS messaging, or executing an external procedure to interface with a secondary system or effect some corrective action. For these purposes an alerting module 200 is provided.

Alerts and escalations are processed as follows. The alerting module 200 is initialised with alert definitions from the descriptive model 240 which specify which local conditions 166 and global conditions 167 relate to an alert and what the escalations rules are for that alert if it is raised.

On receipt of a local condition 166 and global condition 167 from the condition engine 163, alerting will examine it to see if it is included in any alert definition. If it is then alerting 200 will:
(a) propagate an alert 201 to the UI 220.
(b) implement the escalation rules specified in the descriptive model 240 so that the alert is propagated.

### User Interface 220

The User Interface 220 will display data emitted from the Analysis Module 140 in a palatable format including textual and graphical representations of the data. It will provide secure session based access to the monitoring results for users and also make available the means to configure the invention's embodiment to change the operating mode and aspects of the monitored target platform 24.

### Component Definitions 260

The component definitions 260 contain data pertaining to the specific type of platform being monitored including details for each component type:
(a) how to identify running component
(b) specific samples that may be taken
(c) agent tools to use in that data collection
(d) formatting mechanisms to employ
(e) operations to invoke on scalar samples and what the dfault parameters are
(f) observation definitions including default suppression parameters
(g) local condition definitions
(h) state transition tables for each state cataegory

### Descriptive Model 240

The descriptive model 240 contains data pertaining to the specific platform being monitored including:
(a) Agent locations
(b) Monitored platform components
(c) Thresh-holding, benchmarking and rate of change calculation parameters
(d) Observational check parameters
(e) Global Condition parameters
(h) Alert and escalation parameters
Accordingly, it is possible for other target platforms to be added to the system configuration to thus be recognisable by the system 30.

## Claims

1. System for monitoring the availability and performance of a target platform, the system being arranged to acquire data from the target platform leveraging a distinct knowledge of the target platform anatomy including its behaviour, log messages, configuration and public Application Programmer Interfaces (API), the system comprising:
a data collection agent (100) that, through a distinct knowledge of the target platform's anatomy, acquires data pertaining to each target platform component (106) from the operating system (104) hosting the target platform and any public API (105) provided by the target platform.
an acquisition module (120) that loads and processes a descriptive model (240) representing the target platform to be monitored and a plurality of component definitions (260) describing the anatomy of each target platform component to be monitored, wherein the acquisition module (120is adapted to distribute the processed model (240) and the processed component definitions (260) data in the form of a manifest (108) to the agent (100) in order to enable the agent to perform specific data collection tasks, the collected data being transmitted to the acquisition module (120) for further processing (122) prior to further analysis ;
an analysis module (140) that loads:
(i) the descriptive model (240) representing the target platform to be monitored and extracts data pertaining to location specific parameters that are required to process the component definitions and data passed to the analysis module (140) by the acquisition module (120), and
(ii) the plurality of component definitions (260), that define the analysis steps to be performed to detect the status on each target platform component;
wherein the analysis module further comprises means for examining the acquired data and determining the current state of each monitored platform component, the performance of the each component in terms of data propagation and performing calculations to establish:
(i) the rate of change of scalar measurements taken as specified in the descriptive model (240);
(ii) whether any threshold has been breached as specified in the descriptive model (240),
(iii) the deviation from a benchmark value as specified in the descriptive model (240);
an alerting module (200) that obtains data from the analysis module (140) that will elicit an alert for a user and perform alert escalations to propagate the alert to another system; and
a user interface (UI) module (220) that obtains data from the analysis module (140) and the alerting module (200) and displays the data acquired.

2. System of claim 1 wherein the data collection agent (100)is adapted to:
(a) initialise the agent (101) by receiving and processing a manifest (108) from the acquisition module (120) so that an agent toolkit (102) may be configured according to the monitoring requirements at the agent's location.
(b) perform a first data collection task by interrogating the operating system (104) to obtain process information and configuration information pertaining to the monitored component.
(c) perform a second data collection task (102) by connecting to the component via its public APIs.
(d) package all data collected to include the time the data was obtained and the identification of the monitored component it relates to;
(e) make packaged data available in an output buffer (103) so it is collected by the data acquisition module (120).

3. System of claim 2 wherein the initialisation task (101) comprises:
(a) creating a platform component instance (PCI) object as defined in the manifest (108) to represent the target platform component (106) to be monitored, where the PCI defines all sampling that will performed;
(b) creating sampler objects for each sampling activity of a component (106) as defined in each PCI in the manifest (108) that represents the individual sampling activities that must be performed at the specified periodicity and using the specified tool from the agent toolkit (102); and
(c) setting the tool parameters in the sampler object as defined in the sampling activity for a PCI.

4. System of claim 2 or 3 wherein the first data collection task (102) comprises code for:
(a) invoking a sampler object according specified periodicity so that it executes the configured tool from the agent toolkit (102).

5. System of claim 1 wherein the component definitions describe the anatomy of each target platform component and what methodology the agent (100) should use to acquire data from the particular type of target platform to be monitored and what methodology the agent (100) should use to format (122) the data acquired.

6. System of any preceding claim wherein the acquisition module (120) is adapted to:
(a) receive the collected data from a plurality of agents (100).
(b) look up the relevant component definition (260) so as to determine a program method that must be executed with the collected data as argument;
(c) invoke the relevant program method and transmit the resulting data to the analysis module (140) for further processing.

7. System of any preceding claim wherein the descriptive model (240) represents the target platform to be monitored by extracting data pertaining to the parameters required to perform the analysis functions; and
the plurality of component definitions (260), describe the analysis steps that should be performed to detect the status on each target platform component.

8. System of any preceding claim wherein the analysis module (140) is adapted to examine each sample data item received from the acquisition module (120) and dispatch it to a relevant analysis sub-system based on its type as defined in sample data (141) and the loaded component definition.

9. System of claim 8 wherein the analysis module (140) is adapted to process data propagated to it when the sample is indicated as a static data sample (143).

10. System of claim 9 wherein the analysis module a static data analysis module (146) which is adapted to:
(a) parse the static data sample (143), using the parser as specified in the loaded component definition, into the static data model format;
(b) process the static data model formatted data using a processor as specified in the loaded component definition to determine if a static data event (161) should be raised;
(c) propagate any raised static data events (161) to the observation engine (160).

11. System of claim 8 wherein the analysis module (140) is adapted to process data propagated to it when the sample is indicated as a synthetic data sample (144).

12. System of claim 11 wherein the analysis module comprises a latency engine module (147) which is adapted to:
(a) process a plurality of synthetic data samples (144) to ascertain which samples belong to the same latency check activity and calculate the overall transmission time of the synthetic sample;
(b) propagate the latency check result, if defined in the descriptive model (240), for a rate of change calculation (151) to be performed;
(c) propagate the latency check result, if defined in the descriptive model (240), for a threshold evaluation (152) to be performed;
(d) propagate the latency check result, if defined in the descriptive model (240), for a benchmark calculation (153) to be performed.

13. System of claim 8 wherein the code for an analysis module (140) is adapted to process data propagated to it when the sample is indicated as a dynamic scalar sample (149).

14. System of claim 13 wherein the analysis module comprises a threshold breach module (152) which is adapted to:
(a) determine from a plurality of samples (149), if a threshold has been breached given the parameters specified in the descriptive model (240) the parameters including:
(i) an upper threshold limit,
(ii) a lower threshold limit,
(iii) if a breach is considered when the values are within the bounds specified by (i) and (ii) or outside the bounds specified by (i) and (ii),
(iv) the number of samples that must breach the threshold,
(v) the period in which that number of breaches must occur;
(b) propagate the result of the breach test (157) to the UI (220);
(c) propagate breached threshold events (159) to an observation engine (160).

15. System of claim 8 wherein the code for an analysis module (140) is adapted to process data propagated to it when the sample is indicated as a dynamic scalar sample (149).

16. System of claim 15 wherein the analysis module comprises a rate of change calculation module (151) which is adapted to:
(a) calculate from a plurality of samples (149), whose timestamps fall into a time window as specified in the descriptive model (240), the current rate of change of the scalar value of the data collected from the monitored platform component (106);
(b) propagate the result (156) to the UI (220);
(c) propagate the result (154) to the threshold engine (152) for threshold analysis.

17. System of claim 8 wherein the code for an analysis module (140) is adapted to process data propagated to when the sample is indicated as a dynamic scalar sample (149).

18. System of claim 17 wherein the analysis module comprises a benchmark calculation module (153) which is adapted to:
(a) calculate for each sample (149), if specified in the descriptive model (240), the current difference of the scalar value of the data collected from the monitored component (106) and the benchmark specified in the descriptive model (240).
(b) propagate the result (158) to the UI (220).
(c) propagate the result (155) to a threshold engine (152) for threshold analysis.

19. System of claim 8 wherein the analysis module (140) is adapted to process data propagated to it when the sample is indicated as a dynamic aggregate sample (148).

20. System of claim 19 wherein the analysis module comprises an observation engine module (160) which is adapted to:
(a) process dynamic aggregate sample data (148) wherein such sample data is compared given the parameters defined in the component definition (260) related to the collected data, namely:
(i) the value to compare the sample data (148) with;
(ii) if the comparison is for equality;
(iii) if the comparison is for inequality;
(b) propagate static data analysis module (146) elicited static data events (161) to the condition engine module (163);
(c) propagate threshold breach module (152) elicited threshold breach events (159) to a condition engine module (163).

21. System of claim 20 wherein the observation suppression logic is adapted to:
(a) process each observation given the parameters specified in the descriptive model (240) defining the number of times an observation should occur in a given period before the observation is elicited from the observation engine (160).

22. System of claim 20 wherein the analysis module comprises a condition engine module (163) which is adapted to:
(a) examine a plurality of observations (162) given the parameters pertaining to a local condition as defined in the component definition (260) for the relevant component;
(b) annotate an observation as one that in full or in part contributes to a local condition if it is defined as an observation that contributes to that local condition in the component definition (260) for the relevant component;
(c) elicit a local condition (166) if all relevant observations have occurred as defined in the component definition (260) for the relevant component and that the observations have all occurred within a time window as defined in the descriptive model (240);
(d) propagate a local condition (166) to a state analysis module (164);
(e) propagate a local condition (166) to an alerting module (200).

23. System of claim 22 wherein the analysis module (140) is adapted to process local conditions (166) propagated to it.

24. System of claim 23 wherein the state analysis module (164) is adapted to:
(a) examine a plurality of component definitions (260) to obtain the state transition table for each state category for every component type;
(b) examine each local condition (166) propagated to it from the condition engine module (163) to ascertain the new state of a related monitored component (106) given its existing state and a related local condition received;
(c) propagate updated monitored component (106) states (168) to the UI (220) for display.

25. System of claim 1 wherein the analysis module comprises a condition engine module (163) which is adapted to:
(a) examine a plurality of local conditions (166) given the parameters pertaining to a global condition as defined in the descriptive model (240);
(b) annotate a local condition as one that in full or in part contributes to a global condition if it is defined as a local condition that contributes to that global condition in the descriptive model (240);
(c) elicit a global condition (167) if all relevant local conditions have occurred as defined in the descriptive model (240) and that the local conditions have all occurred within a time window as defined in the descriptive model (240);
(d) propagate a global condition (167) to an alerting module (200).

26. System of claim 25 wherein the alerting module (200) is adapted to:
(a) load a plurality of alert definitions as specified in the descriptive model (240) which define the local conditions (166) and global conditions (167) that are related to an alert, and the escalation rules for each alert;
(b) examine each local condition (166) propagated to it from the condition engine module (163) to ascertain if that local condition (166) is related to an alert definition;
(c) examine each global condition (167) propagated to it from the condition engine module (163) to ascertain if that global condition (167) is related to an alert definition;
(d) propagate an alert (201) to the UI (220) should a contributing local condition (166) be detected;
(e) propagate an alert (201) to the UI (220) should a contributing global condition (167) be detected;
(f) implement the escalation rules for the alert given the escalation rules for that alert as defined in descriptive model (240).

27. A computer implemented method of monitoring the availability and performance of a target platform, the method comprising the steps of:
a) acquiring data pertaining to each OSS component (106) from an operating system (104) hosting the target platform and any public application programmer interface (105) provided by the target platform;
b) loading and processing a descriptive model (240) representing the target platform to be monitored and a plurality of component definitions (260), describing the anatomy of each target platform component to be monitored;
c) distributing the processed model (240) and the processed component definitions (260) data in the form of a manifest (108) to the agent (100) in order to enable the agent to perform specific data collection tasks, the collected data being transmitted to the acquisition module (120) for further processing (122) prior to further analysis;
d) loading:
(i) the descriptive model (240) representing the target platform to be monitored and extracts data pertaining to location specific parameters that are required to process the component definitions and data passed to the analysis module (140) by the acquisition module (120), and
(ii) the plurality of component definitions (260), that define the analysis steps to be performed to detect the status on each target platform component.
e) examining the acquired data and determining the current state of each monitored platform component, the performance of the each component in terms of data propagation and performing calculations to establish:
(i) the rate of change of scalar measurements taken as specified in the descriptive model (240);
(ii) whether any threshold has been breached as specified in the descriptive model (240),
(iii) the deviation from a benchmark value as specified in the descriptive model (240);
f) obtaining data from the analysis module (140) that will elicit an alert for a user and performing alert escalations to propagate the alert to another system; and
g) obtaining data from the analysis module (140) and the alerting module (200) and displaying the data acquired.

28. A computer readable storage medium storing a program which when executed on a computer performs the method according to claim 27.
